# EUROPÄISCHE PATENTANMELDUNG

(11) **EP 1 484 828 A1**
(43) Veröffentlichungstag der Anmeldung: **08.12.2004**
(21) Anmeldenummer: 03012524.9
(22) Anmeldetag: 02.06.2003
(51) Int. Cl.: H02G 9/10, G02B 6/44

(54) **Kabelschacht von im Erdboden verlegten Kabelrohren oder -schläuchen eines örtlichen Kabelrohr-Netzsystems**

(71) Anmelder: IED Industrial Engineering & Design GmbH, 8572 Bärnbach (AT)
(72) Erfinder: Auer, Wolfgang, A-8580 Köflach (AT)
(74) Vertreter: Hanke, Hilmar

(57) **Zusammenfassung**

Bei einem Kabelschacht, vorzugsweise Unterflur-Kabelschacht von im Erdboden verlegten Kabelrohren (2) oder -schläuchen eines örtlichen Kabelrohr-Netzsystems, wird vorgeschlagen, daß ein oben offene vorzugsweise topfförmige Kabelschacht (1) im oberen offenen Endbereich einen Umfangsabsatz (4) mit einem erweiterten hochragenden vertikalen Umfangssteg (5) besitzt, wobei im erweiterten Bereich des Umfangsabsatzes (4) innerhalb des vertikalen Umfangssteges (5) ein Deckel (3) formschlüssig mit radialem Spiel (s), vorzugsweise ca. 5mm, aufgenommen ist. Ferner wird ein Kabelschacht (1) mit einem vorzugsweise einsetzbaren Innengehäuse vorgeschlagen, in welchem eine aus dem Innengehäuse herausnehmbare Verbindungsmuffe (24) angeordnet, insbesondere eingehängt werden kann, wobei um das Innengehäuse eine Kabel-Reservelänge (L) wickelbar ist.

## Beschreibung

Die Erfindung betrifft einen Unterflur-Kabelschacht von im Erdboden verlegten Kabelrohren oder -schläuchen eines örtlichen Kabelrohr-Netzsystems, wobei in den Kabelrohren oder - schläuchen Kabel, vorzugsweise Glasfaser-Kabel, aufgenommen sind und der Kabelschacht oberseitig durch einen entfernbaren Deckel abgeschlossen ist. Insbesondere betrifft die Erfindung einen Kabelschacht in Form eines sogenannten Muffenschachtes, in welchem die Kabel mit einer Kabel-Reserverlänge über Verbindungsmuffen oder dergleichen miteinander verbunden bzw. verbindbar sind.

Unterflur-Kabelschachte der vorgenannten Art sind beispielsweise aus DE 43 15 275 C2 und DE 197 36 705 C2 bekannt.

Beim erstgenannten bekannten Unterflur-Kabelschacht ist über dem Deckel, welcher die gleiche Größe wie der Kabelschacht aufweist, ein weiterer dicker Betondeckel vorgesehen, der in einem größeren Betonringraum in das Erdreich eingesetzt ist. Für ein Warten muß der Unterflur-Kabelschacht aufwendig durch Entfernen zweier Deckel geöffnet und nach einem Warten entsprechend aufwendig wieder geschlossen werden. Der Kabelschacht ist als sogenannter Muffenschacht ausgebildet und besitzt eine Kabel-Reservelänge für die herauszunehmende Verbindungsmuffe, wobei die Kabel-Reservelänge nach einer Wartung mehr oder weniger ungeordnet auf dem Kabelschachtboden in Schlaufen liegt und durch übermäßige Krümmung beschädigt werden und Knickstellen erhalten kann, die eine Funktion beeinträchtigen.

Beim zweitgenannten bekannten Unterflur-Kabelschacht ist der Deckel größer als der darunterliegende Kabelschacht ausgebildet und weist einen nach unten ragenden äußeren Umfangsrand auf, der über den oberen Außenrand des Kabelschachtes gestülpt ist. Befindet sich der Kabelschacht im Erdreich, kollidiert der nach unten ragende äußere Umfangsrand des Deckels mit dem Erdreich und kann nur schwer gehandhabt werden. Ist der Deckel nach Art des erstgenannten Unterflur-Kabelschachts noch mit einem zusätzlichen Hohlraum und zusätzlichen oberen Deckel ausgestattet, ist das Öffnen ähnlich umständlich wie beim erstgenannten Unterflur-Kabelschacht. Auch bei dieser Ausführungsform hängt die Kabel-Reservelänge des inneren Verteilers bzw. der Verbindungsmuffe mehr oder weniger frei ungeordnet nach unten und kann bei der Handhabung zerstört werden oder zumindest das Einbringen der Verbindungsmuffe nach einer Wartung an der Oberfläche erschweren.

Ausgehend vom vorgenannten Stand der Technik ist es Aufgabe der Erfindung, einen Kabelschacht der eingangs genannten Art zu schaffen, welcher bei einfachem Aufbau sehr leicht und zuverlässig gehandhabt werden kann. Insbesondere soll in einem ersten Erfindungsaspekt das Öffnen und Schließen eines Dekkels auf einfache Weise möglich sein. In einem zweiten Erfindungsaspekt soll das Herausnehmen und Wiedereinsetzen des inneren Verteilers bzw. der Verbindungsmuffe auf einfache Weise ohne Beeinträchtigung der Kabel-Reservelänge möglich sein.

Gelöst wird die der Erfindung zugrundeliegende Aufgabe nach dem ersten Erfindungsaspekt durch die Merkmale des Anspruchs 1, vorteilhaft weitergebildet durch die Merkmale der Ansprüche 2 bis 13.

Gelöst wird die Erfindung zugrundeliegende Aufgabe nach dem zweiten Erfindungsaspekt durch die Merkmale des Anspruchs 14, vorteilhaft weitergebildet durch die Merkmale der Ansprüche 15 bis 23.

Wesen der Erfindung ist, daß ein Unterflur-Kabelschacht, welcher sowohl ein Muffenschacht oder ein Kabelziehschacht sein kann, einen besonderen Deckel und eine besondere Deckelabstützung aufweist. Insbesondere besitzt der oben offene vorzugsweise topfförmige oder unten offene Kabelschacht im oberen offenen Endbereich einen Umfangsabsatz mit einem erweiterten hochragenden vertikalen Umfangssteg, wobei im erweiterten Bereich des Umfangsabsatzes innerhalb des vertikalen Umfangssteges der Deckel formschlüssig mit radialem Spiel, vorzugsweise ca. 5mm, aufgenommen ist.

Hierbei kann der obere horizontale Deckelrand einen radialen vorstehenden Umfangswulst von insbesondere ca. 3 mm aufweisen, der das radiale Spiel an der dortigen Stelle verkleinert und dadurch eine Engstelle schafft, welche nach einer Verschmutzung durch Sand oder dergleichen im Betrieb eines Kabelschachts leicht wieder geöffnet bzw. durchgestoßen werden kann, wobei der Schmutz der Engstelle in den darunterliegenden breiteren Ringraum fallen kann, ohne weiter in den Kabelschacht eindringen zu können. Insbesondere verläuft die Oberseite des Deckels bündig mit dem Erdboden, und es erstreckt sich die obere Kante des vertikalen Umfangssteges des Kabelschachtes bis zum Erdboden.

Der Umfangsabsatz nebst vertikalem Umfangssteg kann ein Winkelprofilrahmen sein, welcher abgedichtet und fest mit dem Rest des Kabelschachtes vorzugsweise durch Verschweißen verbunden ist. Der Winkelprofilrahmen ist vorzugsweise aus einem radialen Umfangssteg und dem vorgenannten vertikalen Umfangssteg zusammengesetzt.

Der Deckel besitzt eine Bodenplatte und einen hochragenden vertikalen Umfangsrand besitzt, die vorzugsweise miteinander verschweißt sind, wobei der vertikale Umfangsrand am oberen Randabschnitt die bereits angesprochene radial nach außen ragende Umfangswulst aufweisen kann, welche vorzugsweise um einige Millimeter, vorzugsweise etwa um 3mm, horizontal nach außen vorsteht, und vertikal unter der Wulst das Spiel zwischen dem vertikalen Umfangssteg und vertikalem Umfangsrand verbleibt.

Auf der Oberseite der Bodenplatte sind im Bereich des vertikalen Umfangsrandes Schraubklötze mit einer Höhe des vertikalen Umfangsrandes angeordnet, welche vorzugsweise durch Widerstandsschweißung befestigt und auf dem Umfang der Bodenplatte vorzugsweise im wesentlichen in gleichem Abstand voneinander angeordnet sind.

Auf der Oberseite der Bodenplatte ist ferner zumindest ein Hebeklotz mit einer Höhe des vertikalen Umfangsrandes angeordnet, welcher vorzugsweise durch Widerstandsschweißung befestigt ist.

Die Oberseite der Bodenplatte des Deckels ist bevorzugt bis in Höhe der oberen Kante des vertikalen Umfangsrandes mit Beton, Bitumen oder dergleichen ausgegossen.

In die Hebeklötze können oberseitige Hebemittel wie Schraubhaken zum Hochheben des Deckels lösbar eingebracht werden.

Die Schraubklötze dienen zur lösbaren sicheren Befestigung des Deckels auf dem Umfangsabsatz des Kabelschachts mit oder ohne Zwischenordnung einer Gummiablage auf dem Umfangsabsatz, vorzugsweise einer elastomeren Flachdichtung, welche vorzugsweise nach Lösen des Deckels als herausnehmbarer Schmutzfänger dient, auf dem sich durch den Ringspalt durchgestoßenes Erdmaterial angesammelt hat.

Wesen der Erfindung ferner ist, daß ein Kabelschacht in Form eines Muffenschachtes, in welchem die Kabel mit einer Kabel-Reservelänge über Verbindungsmuffen oder dergleichen miteinander verbunden bzw. verbindbar sind, dergestalt getroffen ist, daß ein vorzugsweise einsetzbares Innengehäuse vorgesehen ist, in welchem die aus dem Innengehäuse herausnehmbare(n) Verbindungsmuffe(n) angeordnet, insbesondere eingehängt ist/sind, wobei um das Innengehäuse die Kabel-Reservelänge gewickelt ist.

Das Innengehäuse, welches insbesondere ein konzentrisches Innenrohr ist, erstreckt sich bevorzugt über die gesamte Höhe des Kabelschachts, wobei die Kabel-Reserve-länge zum oberseitigen Herausnehmen der Verbindungsmuffe(n) aus dem oben offenen Innengehäuse bzw. Innenrohr am Außenmantel des Innengehäuses bzw. Innenrohrs in zumindest einer großen schrägen vorzugsweise ovalförmigen Kabelschlaufe praktisch längs der gesamten Höhe des Innengehäuses bzw. Innenrohrs gewickelt ist. Hierbei ist insbesondere am Außenmantel des Innenrohrs eine radial nach außen weisende in Seitenansicht im wesentlichen schräge Schlaufenauflage, vorzugsweise eine Kabelführung, vorgesehen.

Die Schlaufenauflage können voneinander beabstandete, vorzugsweise kurze Radialstifte sein, welche an der Außenwand des Innenrohrs befestigt sind.

Die Schlaufenauflage kann aber auch ein durchgehender ovalförmiger, in Seitenansicht im wesentlichen schräger vorzugsweise schmaler Horizontalsteg sein, welcher an seiner untersten Stelle zu einer radialen Durchgangsöffnung des Kabelschachts weist, durch welche das Kabel bzw. das Kabelrohr in den Kabelschacht geführt ist.

Bevorzugt besitzt das oben offene Innenrohr oberseitig eine Mantelaussparung, welche als Kabeleinlaß dient und im Bereich der höchsten Stelle der Schlaufenauflage liegt. Die obere Mantelaussparung des Innenrohrs ist zur unteren radialen Durchgangsöffnung des Kabelschachts bevorzugt entgegengesetzt gelegen.

Besonders zweckmäßig ist es, wenn die Schlaufenauflage als Innenführung des Innenrohrs im Kabelschacht dient.

Das Innenrohr besitzt einen durchgehenden Schachtboden, der sich radial bis zum Innenumfang des Kabelschachts erstreckt. Dann kann bevorzugt der Kabelschacht selbst ohne Boden ausgebildet sein.

Durch einen erfindungsgemäßen Deckel und einer erfindungsgemäßen Deckelabstützung der vorgenannten Art läßt sich ein Unterflur-Kabelschacht sehr leicht warten. Aufgrund der einfachen Ausgestaltung ist der Herstellungsaufwand minimal, insbesondere dann, wenn er aus Stahlbeton hergestellt ist. Der Deckel läßt sich leicht abnehmen und leicht wieder aufsetzen, ohne den Kabelschacht in Mitleidenschaft zu ziehen. Der Schacht hat einen Schachtdeckel, der einen Rahmen aus einem winkelprofil besitzt. Am oberen Randabschnitt des vertikalen Schenkels des Winkelprofils ragt nach außen eine umlaufende Wulst vor, die zur Folge hat, daß sich der Zwischenraum zwischen dem Schachtdeckel und dem Außenrahmen des Schachtes nur in diesem Bereich mit Erde, Schmutz oder dergleichen zusetzt, und der darunter liegende Raum für Schmutzansammlung freibleibt. Der Schachtdeckel ist damit leichter abnehmbar. Außerdem ist an der Innenseite des Winkelprofilrahmens eine innere Konsole bzw. ein Absatz angeformt, auf den gegebenenfalls auch Moniereisen durch Widerstandsschweißung angebracht werden können. Dies verringert die Herstellungszeit des Dekkels. Der Übergangsbereich zwischen dem vertikalen und dem horizontalen Steg des Winkelprofils ist gerundet, wodurch eine Beschädigung des Gummiauflagers des Deckels vermieden wird. Ein Schacht der erfindungsgemäßen Art befindet sich bevorzugt im Bereich einer Fahrbahn oder eines Gehweges, wobei der Schachtdeckel insbesondere bündig mit der Fahrbahnfläche oder der Gehwegfläche abschließt. Der Schachtdeckel sitzt mit geringem Spiel von einigen Millimetern in einem runden oder rechteckigen oder quadratischen Außenrahmen, der an der Schachtwand befestigt ist. Insbesondere dann, wenn der Kabelschacht bis zur Erdoberfläche reicht, ist dessen Handhabung besonders einfach. Der Schachtdeckel kann leicht von eingedrungenen Schmutzpartikeln befreit werden, insbesondere dann ein, wenn der Winkelprofilrahmen des Kabelschachtes am oberen Randabschnitt eine nach außen ragenden Wulst besitzt, die sogar eine selbsttätige Befreiung von Schmutzpartikeln bewirkt, wenn der Deckel abgenommen wird. Findet keine selbsttätige Befreiung von Schmutzpartikeln statt, kann in Ausnahmefällen mit einem Werkzeug wie einem Schraubenzieher ohne nennenswerten Aufwand das Volumen des angesammelten Schmutzes nach unten gedrückt werden, wobei der Schmutz dann in den erheblich breiteren unteren Zwischenraum zwischen Deckel und dem umgebenden Schachtrahmen fällt, und zwar auf den erfindungsgemäßen Umfangsabsatz, wo später der Schmutz beispielsweise durch Absaugen entfernt werden kann. In keinem Falle kann der Schmutz bis zum Schachtboden fallen.

Durch das erfindungsgemäße Innenrohr als separates Bauteil, welches in einen Unterflur-Kabelschacht, einem sogenannten Muffenschacht, eingesetzt werden kann, wird sowohl für die Kabel-Reservelänge als auch für die Verbindungsmuffe(n) jeweils ein separater Stauraum geschaffen, so daß eine herausgenommene Verbindungsmuffe nach einer Wartung bei gleichzeitigem Umwickeln der Kabel-Reservelänge um das Innenrohr störungsfrei in das Innere des Innenrohrs wieder eingesetzt werden kann. Nach dem Stand der Technik hindert die Wicklung ein Einsetzen der Verbindungsmuffe.

Insbesondere wird durch ein erfindungsgemäßes Innenrohr eine besondere Kabelabstützung, insbesondere Kabelführung, für die Kabel-Reservelänge eingerichtet, welche bei jedem Muffenschacht erforderlich ist, um die innere Verbindungsmuffe oder den inneren Verteiler für eine Wartung, Reparatur oder einen neuen Anschluß an die Erdoberfläche zu heben. Das vorzugsweise konzentrische Innenrohr wird durch die Kabelauflage bzw. Kabelführung zentriert im Außenrohr bzw. im eigentlichen Kabelschacht gehalten und erstreckt sich praktisch über die gesamte Höhe des Kabelschachtes. Die Kabelauflage bzw. Kabelführung erstreckt sich in einem vergleichsweise großen Oval über dem Außenmantel des Innenrohrs. Dadurch wird nahezu die gesamte Höhe des Kabelschachtes als Stauraum für die Kabel-Reservelänge ausgenutzt. Das große Oval besitzt eine vergleichsweise geringe Krümmung, so daß die Kabel-Reservelänge nicht durch zu starke Krümmung bzw. Wicklung beschädigt werden kann. Die Kabel-Reservelänge ruht geordnet auf ihrer statischen Unterlage, auch bei einem Herausnehmen der Verbindungsmuffe, wobei die Kabel-Reservelänge sich bei einem Herausnehmen selbsttätig entwickelt. Umgekehrt wird bei einem Wiedereinsetzen einer Verbindungsmuffe nach einer Wartung in das Innere des Innenrohrs die freie Kabel-Reservelänge wieder auf ihrer Ablage geordnet abgelegt, ohne daß "Kabelsalat" auf dem Schachtboden entsteht, wie dies beim Stand der Technik der Fall sein kann.

Die Erfindung wird nachfolgend von Ausführungsbeispielen unter Bezugnahme auf die beigefügten Zeichnungen näher beschrieben; es zeigen:
- Figur 1: in einer perspektivischen Darstellung einen Unterflur-Kabelschacht in Form eines Muffenschachtes mit in der Erfindung,
- Figur 2: den Unterflur-Kabelschacht gemäß Figur 1 nach Abnahme des Deckels,
- Figur 3: die Einzelheit nach Figur 2 nach Entfernung der unteren Kabeleinführung,
- Figur 4: die Einzelheit eines erfindungsgemäßen Deckels,
- Figur 5: einen Teilquerschnitt des erfindungsgemäßen Deckels nach Figur 4,
- Figur 6: die Einzelheit eines erfindungsgemäßen Innenrohrs mit einer ovalförmigen Kabelauflage für die Kabel-Reservelänge,
- Figur 7: einen schematischen Vertikalschnitt durch den Unterflur-Kabelschacht nach den Figuren 1 bis 6,
- Figur 8: die Einzelheit X der unteren Kabeleinführung nach Figur 7,
- Figur 9: eine schematische vertikale Transparentansicht der Kabelführung der Kabel-Reservelänge, gesehen gemäß Figur 7 von rechts,
- Figur 10: den Unterflur-Kabelschacht nach den Figuren 1 bis 9, schematisch, bei abgenommenem Deckel und herausgenommener Verbindungsmuffe bei einer Wartung,
- Figur 11: ein anderes Innenrohr ähnlich Figur 6 ohne schräge Kabelführung, lediglich zur Schaffung zweier separater Stauräume für eine Verbindungsmuffe einerseits und die Kabel-Reservelänge andererseits,
- Figuren 12 bis 15: einen anderen Unterflur-Kabelschacht in Form eines Kabelziehschachtes mit einem Rohranschluß, mit Ausbildung eines erfindungsgemäßen Dekkels, und
- Figuren 16 bis 19: einen dritten Unterflur-Kabelschacht in Form eines die Kabelziehschachtes mit einem Schlauchanschluß, mit Ausbildung eines erfindungsgemäßen Deckels, ähnlich den Figuren 12 bis 15.

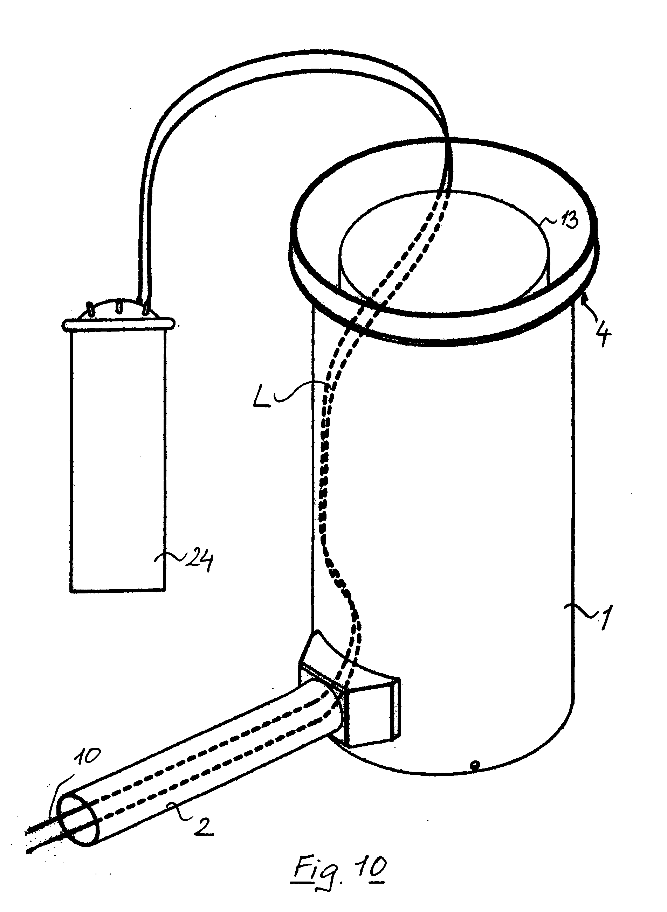

Gemäß Zeichnungen ist ein Unterflur-Kabelschacht von im Erdboden verlegten Kabelrohren 2 oder -schläuchen eines örtlichen Kabelrohr-Netzsystems vorgesehen, wobei in den Kabelrohren oder -schläuchen Kabel 10, vorzugsweise Glasfaser-Kabel, aufgenommen sind, wie dies insbesondere der Figur 10 zu entnehmen ist.

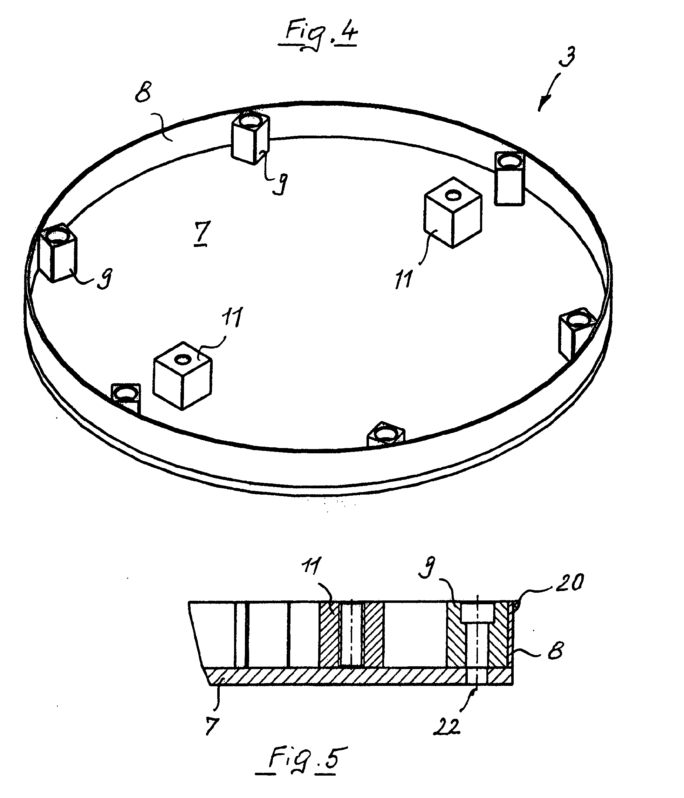

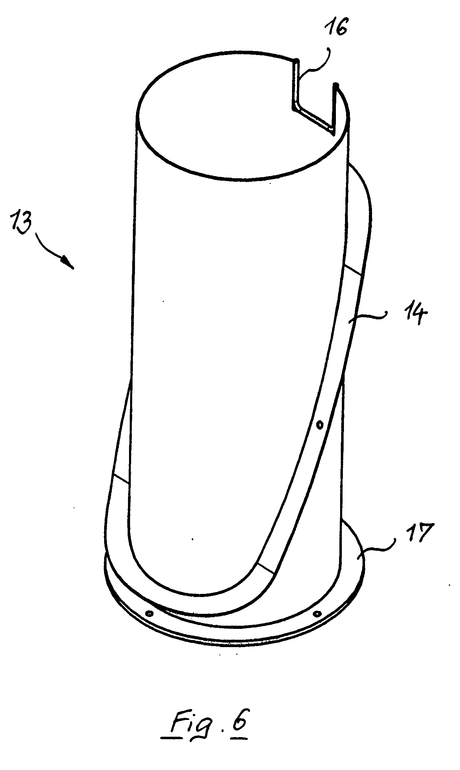

Der Kabelschacht 1 ist oberseitig durch einen entfernbaren Deckel 3 abgeschlossen ist, der insbesondere in den Figuren 4 und 5 zu sehen ist.

Der Kabelschacht 1 ist oben offen, topfförmig ausgebildet - gegebenenfalls auch ohne Boden - und besitzt im oberen offenen Endbereich einen Umfangsabsatz 4 mit einem erweiterten hochragenden vertikalen Umfangssteg 5, wobei im erweiterten Bereich des Umfangsabsatzes 4 innerhalb des vertikalen Umfangssteges 5 der Deckel 3 formschlüssig mit radialem Spiel s, vorzugsweise ca. 5mm, aufgenommen ist.

Die Oberseite des Deckels 3 verläuft bündig mit dem Erdboden, wie auch die obere Kante des vertikalen Umfangssteges 5 des Kabelschachtes 1 bis zum Erdboden verläuft.

Der Umfangsabsatz 4 ist nebst vertikalem Umfangssteg 5 ein Winkelprofilrahmen, welcher abgedichtet und fest mit dem Rest des Kabelschachtes 1 vorzugsweise durch Verschweißen verbunden ist.

Der Winkelprofilrahmen ist aus einem radialen Umfangssteg 6 und dem vorgenannten vertikalen Umfangssteg 5 zusammengesetzt.

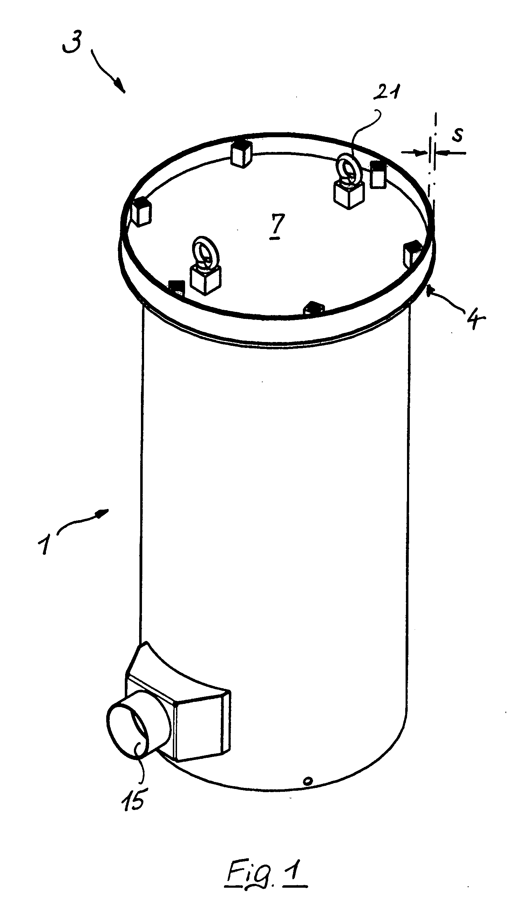

Der Deckel 3 gemäß den Figuren 1, 4, 5, 12 und 16 besitzt eine Bodenplatte 7 und einen hochragenden vertikalen Umfangsrand 8, die vorzugsweise miteinander verschweißt sind.

Hierbei weist in besonderer Erfindungsvariante der vertikale Umfangsrand 8 am oberen Randabschnitt eine radial nach außen ragende Umfangswulst 20 gemäß Figur 5 auf, welche vorzugsweise um einige Millimeter, etwa um 3mm, horizontal nach außen vorsteht, und vertikal unter der Wulst das Spiel s zwischen dem vertikalen Umfangssteg 6 und vertikalem Umfangsrand 8 verbleibt.

Auf der Oberseite der Bodenplatte 7 sind im Bereich des vertikalen Umfangsrandes 8 Schraubklötze 9 mit einer Höhe des vertikalen Umfangsrandes 8 angeordnet, vorzugsweise durch Widerstandsschweißung befestigt, welche auf dem Umfang der Bodenplatte vorzugsweise im wesentlichen in gleichem Abstand voneinander angeordnet sind.

Ferner befinden sich auf der Oberseite der Bodenplatte 7 zwei zentral symmetrisch angeordnete Hebeklötze 11 mit einer Höhe des vertikalen Umfangsrandes 8, welche durch Widerstandsschweißung auf der Bodenplatte 7 befestigt sind.

Die Oberseite der Bodenplatte 7 des Deckels 3 ist bis in Höhe der oberen Kante des vertikalen Umfangsrandes 8 mit Beton 25, Bitumen oder dergleichen ausgegossen.

In die Hebeklötze 11 sind oberseitige Hebemittel wie Schraubhaken 21 zum Hochheben des Deckels 3 lösbar eingeschraubt, wie auch in die Schraubklötze 9 oberseitig Senkschrauben 22 zum Befestigen des Deckels 3 auf dem Umfangsabsatz 4 des Kabelschachts 1 lösbar eingebracht sind.

Der Deckel 3 ist am Umfangsabsatz 4 unter Zwischenordnung einer ringförmigen Flachdichtung 23 lösbar befestigt, welche nach Lösen des Deckels auch als herausnehmbarer Schmutzfänger dienen kann.

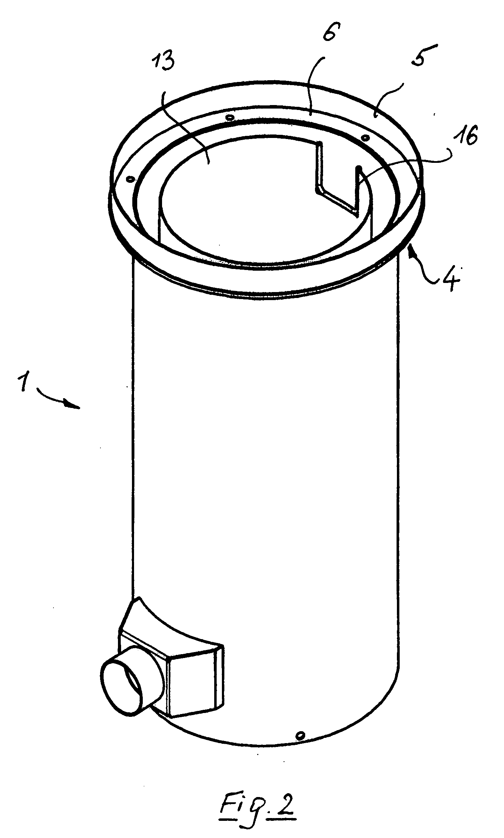

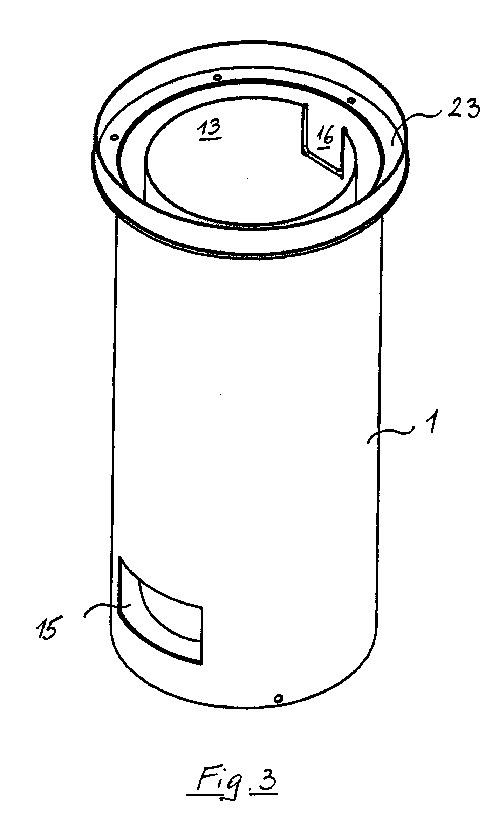

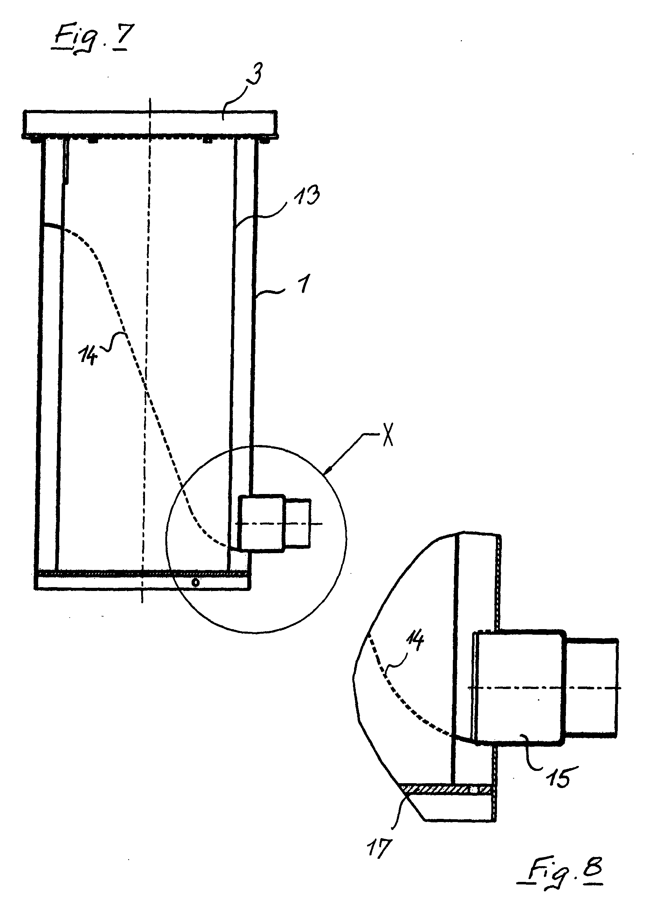

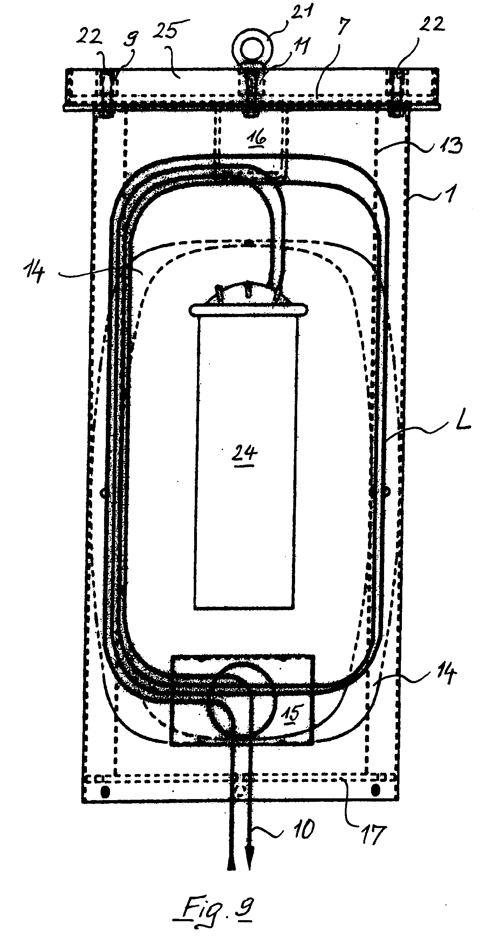

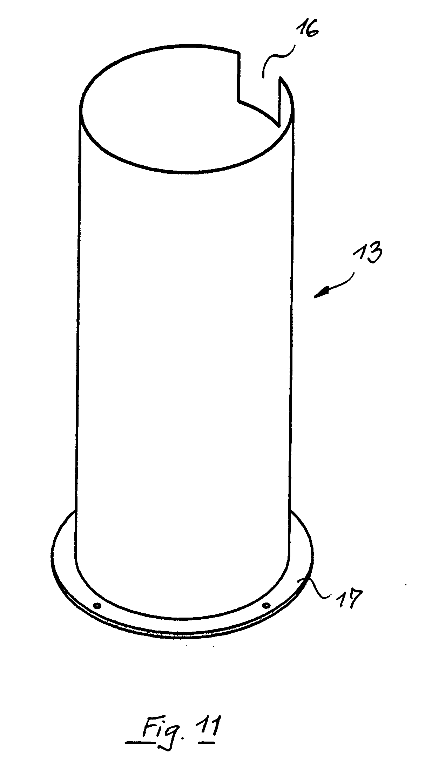

Mit Bezug auf die Figuren 1 bis 11 wird nachfolgend insbesondere die erfindungsgemäße Ausgestaltung einer besonderen Kabelführung bei einem Unterflur-Kabelschacht von im Erdboden verlegten Kabelrohren 2 oder -schläuchen eines örtlichen Kabelrohr-Netzsystems beschrieben, wobei in den Kabelrohren oder -schläuchen Kabel 10, vorzugsweise Glasfaser-Kabel, aufgenommen sind, und der Kabelschacht 1 in Form eines Muffenschachts ausgebildet ist, in welchem die Kabel 10 über eine Verbindungsmuffe 24 oder dergleichen miteinander verbunden bzw. verbindbar sind.

Der Kabelschacht 1 weist einen Einsatz in Form eines Innengehäuses, insbesondere eines konzentrischen Innenrohrs 13 auf, in welchem die Verbindungsmuffe 24 angeordnet ist. Durch das Innenrohr 13 wird sowohl für die Kabel-Reservelänge L als auch für die Verbindungsmuffe 24 jeweils ein separater Stauraum geschaffen, so daß eine herausgenommene Verbindungsmuffe nach einer Wartung bei gleichzeitigem Umwickeln der Kabel-Reservelänge L um das Innenrohr 13 störungsfrei in das Innere des Innenrohrs wieder eingesetzt werden kann.

Es erstreckt sich das Innengehäuse bzw. Innenrohr 13 im wesentlichen über die gesamte Höhe oder einen großen Teil der Höhe des Kabelschachts 1, und es ist die Kabel-Reservelänge L zum oberseitigen Herausnehmen der Verbindungsmuffe aus dem oben offenen Innengehäuse bzw. Innenrohr 13 am Außenmantel des Innengehäuses bzw. Innenrohrs in zumindest einer großen schrägen vorzugsweise ovalförmigen Kabelschlaufe praktisch längs der gesamten Höhe des Innengehäuses bzw. Innenrohrs gewickelt.

Die vorgenannte Kabelführung ist am Außenmantel des Innenrohrs 13 als eine radial nach außen weisende in Seitenansicht im wesentlichen schräge Schlaufenauflage 14 vorgesehen, welche fest mit dem Innenrohr verbunden ist.

Die Schlaufenauflage 14 können in einer nicht veranschaulichten Ausführungsvariante voneinander beabstandete, kurze Radialstifte sein.

In einer veranschaulichten Ausführungsvariante ist gemäß den Figuren 6 bis 11 die Schlaufenauflage 14 ein durchgehender ovalförmiger, in Seitenansicht im wesentlichen schräger vorzugsweise schmaler Horizontalsteg, welcher an seiner untersten Stelle zu einer radialen Durchgangsöffnung 15 des Kabelschachts 1 weist, durch welche das Kabel 10 bzw. das Kabelrohr 2 in den Kabelschacht 1 stetig geführt ist.

Das oben offene Innenrohr 13 besitzt oberseitig eine Mantelaussparung 16, welche als Kabeleinlaß dient und im Bereich der höchsten Stelle der Schlaufenauflage 14 liegt. Auf der anderen Seite ist die obere Mantelaussparung 16 des Innenrohrs 13 zur unteren radialen Durchgangsöffnung 15 des Kabelschachts 1 entgegengesetzt gelegen.

Die Schlaufenauflage 14 dient als Innenführung des Innenrohrs 13 im Kabelschacht 1.

Das Innenrohr 13 besitzt einen durchgehenden Schachtboden 17, der sich radial bis zum Innenumfang des Kabelschachts 1 erstreckt.

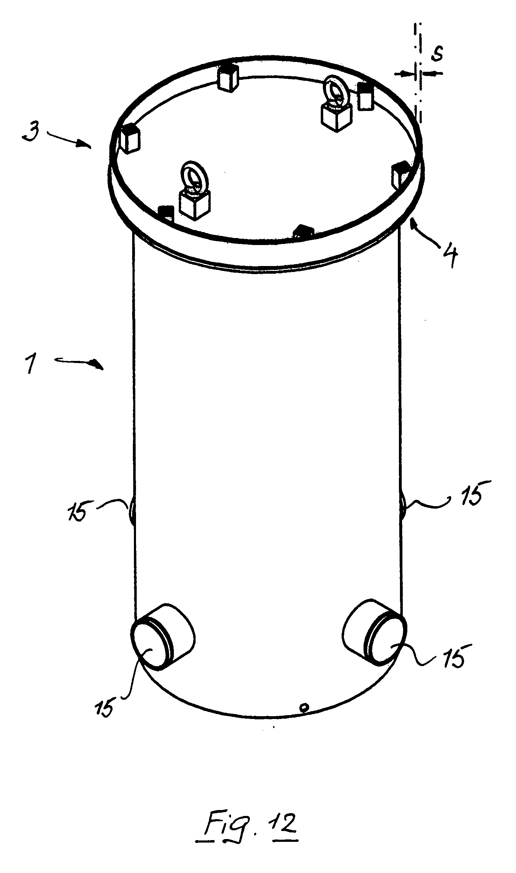

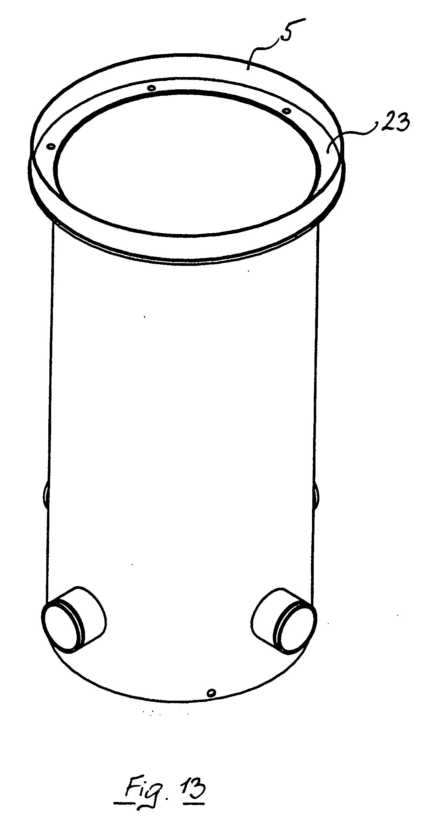

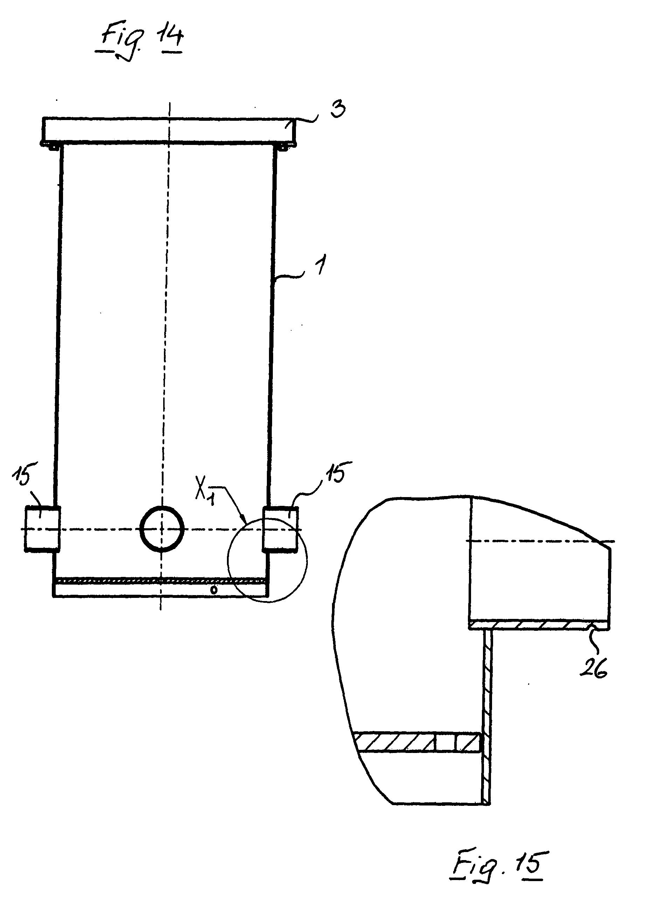

Die gemäß den Figuren 12 bis 15 veranschaulichte Erfindungsvariante kennzeichnet sich durch einen Unterflur-Kabelschacht 1 in Form eines Kabelziehschachts, welcher einwandig ausgebildet und mit einem erfindungsgemäßen Deckel 3 und einem erfindungsgemäßen Umfangsabsatz 4 ausgestaltet ist. Der Kabelziehschacht weist im Bereich des Bodens mehrere diametral entgegengesetzte radiale Durchgangsöffnungen 15 zur Durchleitung der Kabel 10 auf. Wie in der Einzelheit X1 gemäß Figur 15 dargestellt, besitzt jede radiale Durchgangsöffnung 15 einen Anschlußstutzen mit einer Außendichtung 26 für ein zu installierendes Kabelrohr 2, welches die Kabel 10 enthält.

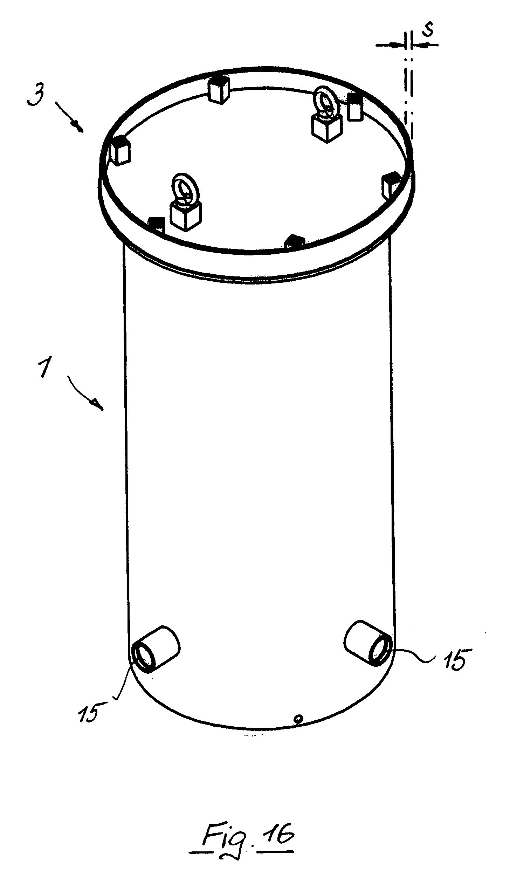

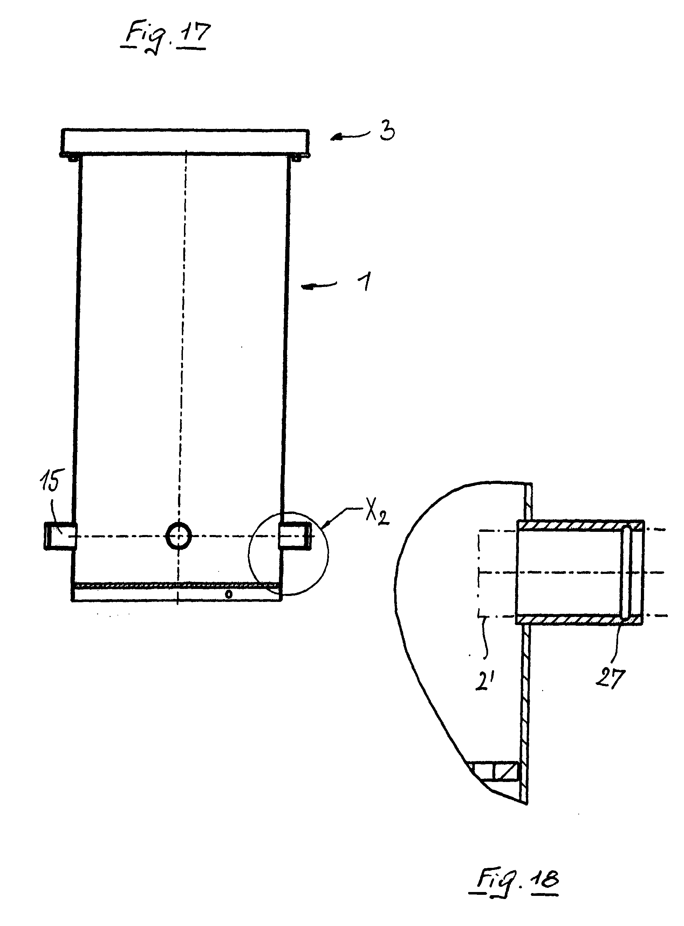

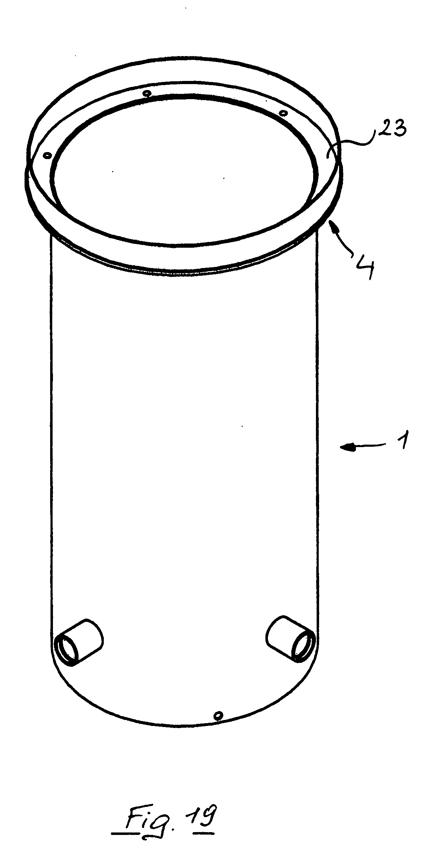

Auch die in den Figuren 16 bis 19 dargestellte Erfindungsvariante betrifft einen Unterflur-Kabelschacht 1 in Form eines Kabelziehschachtes wie vorgenannt, jedoch nicht für einen Rohranschluß eines Kabelrohrs 2, sondern für einen flexiblen Kabelschlauch 2', welcher durch den Anschlußstutzen der radialen Durchgangsöffnung 15 abgedichtet geführt ist, wobei eine Innendichtung 27 vorgesehen ist, wie dies die Einzelheit X2 der Figur 18 ausweist.

## Patentansprüche

1. Unterflur-Kabelschacht von im Erdboden verlegten Kabelrohren (2) oder -schläuchen eines örtlichen Kabelrohr-Netzsystems, wobei in den Kabelrohren oder -schläuchen Kabel (10), vorzugsweise Glasfaser-Kabel, aufgenommen sind und der Kabelschacht (1) oberseitig durch einen entfernbaren Deckel (3) abgeschlossen ist,
**dadurch gekennzeichnet,**
**daß** der oben offene vorzugsweise topfförmige Kabelschacht (1) im oberen offenen Endbereich einen Umfangsabsatz (4) mit einem erweiterten hochragenden vertikalen Umfangssteg (5) besitzt, wobei im erweiterten Bereich des Umfangsabsatzes (4) innerhalb des vertikalen Umfangssteges (5) der Deckel (3) formschlüssig mit radialem Spiel (s), vorzugsweise ca. 5mm, aufgenommen ist.

2. Unterflur-Kabelschacht nach Anspruch 1,
**dadurch gekennzeichnet,**
**daß** die Oberseite des Deckels (3) bündig mit dem Erdboden verläuft.

3. Unterflur-Kabelschacht nach Anspruch 1 oder 2,
**dadurch gekennzeichnet,**
**daß** sich die obere Kante des vertikalen Umfangssteges (5) des Kabelschachtes (1) bis zum Erdboden erstreckt.

4. Unterflur-Kabelschacht nach einem der Ansprüche 1 bis 3,
**dadurch gekennzeichnet,**
**daß** der Umfangsabsatz (4) nebst vertikalem Umfangssteg (5) ein Winkelprofilrahmen ist, welcher abgedichtet und fest mit dem Rest des Kabelschachtes (1) vorzugsweise durch Verschweißen verbunden ist.

5. Unterflur-Kabelschacht nach Anspruch 4,
**dadurch gekennzeichnet,**
**daß** der Winkelprofilrahmen aus einem radialen Umfangssteg (6) und dem vertikalen Umfangssteg (5) zusammengesetzt ist.

6. Unterflur-Kabelschacht nach einem der Ansprüche 1 bis 5,
**dadurch gekennzeichnet,**
**daß** der Deckel (3) eine Bodenplatte (7) und einen hochragenden vertikalen Umfangsrand (8) besitzt, die vorzugsweise miteinander verschweißt sind.

7. Unterflur-Kabelschacht nach Anspruch 6,
**dadurch gekennzeichnet,**
**daß** der vertikale Umfangsrand (8) am oberen Randabschnitt eine radial nach außen ragende Umfangswulst (20) aufweist, welche vorzugsweise um einige Millimeter, vorzugsweise etwa um 3mm, horizontal nach außen vorsteht, und vertikal unter der Wulst das Spiel (s) zwischen dem vertikalen Umfangssteg (6) und vertikalem Umfangsrand (8) verbleibt.

8. Unterflur-Kabelschacht nach Anspruch 6 oder 7,
**dadurch gekennzeichnet,**
**daß** auf der Oberseite der Bodenplatte (7) im Bereich des vertikalen Umfangsrandes (8) Schraubklötze (9) mit einer Höhe des vertikalen Umfangsrandes (8) angeordnet, vorzugsweise durch Widerstandsschweißung befestigt, sind, welche auf dem Umfang der Bodenplatte vorzugsweise im wesentlichen in gleichem Abstand voneinander angeordnet sind.

9. Unterflur-Kabelschacht nach einem der Ansprüche 6 bis 8,
**dadurch gekennzeichnet,**
**daß** auf der Oberseite der Bodenplatte (7) zumindest ein Hebeklotz (11) mit einer Höhe des vertikalen Umfangsrandes (8) angeordnet, vorzugsweise durch Widerstandsschweißung befestigt ist.

10. Unterflur-Kabelschacht nach einem der Ansprüche 6 bis 9,
**dadurch gekennzeichnet,**
**daß** die Oberseite der Bodenplatte (7) des Deckels (3) bis in Höhe der oberen Kante des vertikalen Umfangsrandes (8) mit Beton (25), Bitumen oder dergleichen ausgegossen ist.

11. Unterflur-Kabelschacht nach Anspruche 9 oder 10,
**dadurch gekennzeichnet,**
**daß** in die Hebeklötze (11) oberseitige Hebemittel wie Schraubhaken (21) zum Hochheben des Deckels (3) lösbar einbringbar sind.

12. Unterflur-Kabelschacht nach einem der Ansprüche 8 bis 11,
**dadurch gekennzeichnet,**
**daß** in die Schraubklötze (9) oberseitig vorzugsweise Senkschrauben (22) zum Befestigen des Deckels (3) auf dem Umfangsabsatz (4) des Kabelschachts (1) lösbar einbringbar sind.

13. Unterflur-Kabelschacht nach einem der Ansprüche 1 bis 12,
**dadurch gekennzeichnet,**
**daß** der Deckel (3) am Umfangsabsatz (4) unter Zwischenordnung einer vorzugsweise ringförmigen Flachdichtung (23) lösbar befestigt ist, welche vorzugsweise nach Lösen des Deckels als herausnehmbarer Schmutzfänger dient.

14. Kabelschacht vorzugsweise von im Erdboden verlegten Kabelrohren (2) oder -schläuchen eines örtlichen Kabelrohr-Netzsystems, wobei in den Kabelrohren oder - schläuchen Kabel (10), vorzugsweise Glasfaser-Kabel, aufgenommen sind, und der Kabelschacht (1) oberseitig durch einen entfernbaren Deckel (3) abgeschlossen und in Form eines Muffenschachts ausgebildet ist, in welchem die Kabel (10) mit einer Kabel-Reservelänge (L) über Verbindungsmuffen (24) oder dergleichen miteinander verbunden bzw. verbindbar sind, vorzugsweise nach einem der Ansprüche 1 bis 13,
**dadurch gekennzeichnet,**
**daß** der Kabelschacht (1) ein vorzugsweise einsetzbares Innengehäuse aufweist, in welchem die aus dem Innengehäuse herausnehmbare(n) Verbindungsmuffe(n) (24) angeordnet, insbesondere eingehängt ist/sind, wobei um das Innengehäuse die Kabel-Reservelänge (L) gewickelt ist.

15. Kabelschacht nach Anspruch 14,
**dadurch gekennzeichnet,**
**daß** sich das Innengehäuse, vorzugsweise ein konzentrisches Innenrohr (13), vorzugsweise über die gesamte Höhe des Kabelschachts (1) erstreckt und die Kabel-Reservelänge (L) zum oberseitigen Herausnehmen der Verbindungsmuffe(n) aus dem oben offenen Innengehäuse bzw. Innenrohr (13) am Außenmantel des Innengehäuses bzw. Innenrohrs in zumindest einer großen schrägen vorzugsweise ovalförmigen Kabelschlaufe praktisch längs der gesamten Höhe des Innengehäuses bzw. Innenrohrs gewickelt ist.

16. Kabelschacht nach Anspruch 15,
**dadurch gekennzeichnet,**
**daß** am Außenmantel des Innenrohrs (13) eine radial nach außen weisende in Seitenansicht im wesentlichen schräge Schlaufenauflage (14), vorzugsweise Kabelführung, vorgesehen, insbesondere befestigt, ist.

17. Kabelschacht nach Anspruch 16,
**dadurch gekennzeichnet,**
**daß** die Schlaufenauflage (14) voneinander beabstandete, vorzugsweise kurze Radialstifte sind.

18. Kabelschacht nach Anspruch 16,
**dadurch gekennzeichnet,**
**daß** die Schlaufenauflage (14) ein durchgehender ovalförmiger, in Seitenansicht im wesentlichen schräger vorzugsweise schmaler Horizontalsteg ist, welcher an seiner untersten Stelle zu einer radialen Durchgangsöffnung (15) des Kabelschachts (1) weist, durch welche das Kabel (10) bzw. das Kabelrohr (2) in den Kabelschacht (1) geführt ist.

19. Kabelschacht nach einem der Ansprüche 15 bis 18,
**dadurch gekennzeichnet,**
**daß** das oben offene Innenrohr (13) oberseitig eine Mantelaussparung (16) besitzt, welche als Kabeleinlaß dient.

20. Kabelschacht nach Anspruch 19,
**dadurch gekennzeichnet,**
**daß** die Mantelaussparung (16) im Bereich der höchsten Stelle der Schlaufenauflage (14) liegt.

21. Kabelschacht nach Anspruch 19 oder 20,
**dadurch gekennzeichnet,**
**daß** die obere Mantelaussparung (16) des Innenrohrs (13) zur unteren radialen Durchgangsöffnung (15) des Kabelschachts (1) entgegengesetzt gelegen ist.

22. Kabelschacht nach einem der Ansprüche 16 bis 21,
**dadurch gekennzeichnet,**
**daß** die Schlaufenauflage (14) als Innenführung des Innenrohrs (13) im Kabelschacht (1) dient.

23. Kabelschacht nach einem der Ansprüche 15 bis 22,
**dadurch gekennzeichnet,**
**daß** das Innenrohr (13) einen durchgehenden Schachtboden (17) besitzt, der sich radial bis zum Innenumfang des Kabelschachts (1) erstreckt.
